# EUROPEAN PATENT SPECIFICATION

(11) **EP 1 593 726 B1**
(45) Date of publication and mention of the grant of the patent: **21.08.2013**
(21) Application number: 04704361.7
(22) Date of filing: 22.01.2004
(51) Int. Cl.: C09J 161/06, B32B 15/06, B32B 25/08, C08L 61/06

(54) **WATER-BASED VULCANIZABLE ADHESIVE COMPOSITION**
WÄSSRIGE VULKANISIERBARE KLEBMASSE
PREPARATION ADHESIVE AQUEUSE VULCANISABLE

(30) Priority: 12.02.2003 JP 2003033315; 01.04.2003 JP 2003097644
(43) Date of publication of application: 09.11.2005
(73) Proprietor: NOK CORPORATION, Tokyo 105-8585 (JP)
(72) Inventor: FUKASAWA, Kiyofumi, c/o NOK Corporation, Fujisawa-shi, Kanagawa 2510042 (JP); ABE, Katsumi, c/o NOK Corporation, Fujisawa-shi, Kanagawa 2510042 (JP)
(74) Representative: HOFFMANN EITLE
(86) International application number: PCT/JP2004/000518
(87) International publication number: WO 2004/072201

(56) References cited:
- JP-A- 6 306 340
- JP-A- 61 278 579
- US-A- 5 200 455

## Description

### TECHNICAL FIELD

The present invention relates to an aqueous vulcanizable adhesive composition, and more particularly to an aqueous vulcanizable adhesive composition, where the amount of a harmful organic solvent to human bodies or environ-ments is considerably reduced.

### BACKGROUND ART

In the production of composites of metal or resin with rubber such as nitrile rubber, acrylic rubber, etc., a phenol resin-based, vulcanizable adhesive is used. The phenol resin-based adhesive includes two types, i.e. alcohol-soluble type and water-soluble type. Alcohol-soluble phenol resin-based adhesive is prepared by subjecting phenol and formalin to reaction in the presence of a basic catalyst, followed by vacuum dehydration, dissolution in alcohol, neutralization with an acid, thereby improving the preservability, and finally by addition of a powdery filler. Before use, a curing agent such as hexamethylenetetramine, benzenesulfonic acid, p-toluene sulfonic acid, etc. is added thereto. To conduct bonding, the adhesive is applied to surfaces to be bonded, and the applied surfaces are laid one upon another, and left for standing at the ordinary temperature, thereby forming a strong, insoluble and non-meltable adhesive layer.

JP-A-53-102359 discloses a process for preparing an aqueous dispersion of phenol resin by mixing (a) substantially water-insoluble phenol resin, (b) water, (c) an organic coupling solvent, and (d) polyvinyl alcohol at a sufficient temperature for a sufficient time for forming an aqueous dispersion of phenol resin, where the phenol resin is added to a solution of polyvinyl alcohol in a mixture of water and coupling solvent under shearing agitation.

It is further disclosed that the coupling solvent includes ethanol, n-propanol, isopropanol, monobutyl ether, monoisobutyl ether or monomethyl ether acetate of ethylene glycol, monobutyl ether or monoethyl ether acetate of diethylene glycol, propylene glycol monopropyl ether, methoxyacetone, etc., and that these coupling agent solvents have a complete miscibility with water, and phenol resin can be formed as a 80 wt. % solution.

However, such a process for preparing an aqueous dispersion of phenol resin can form even a stable emulsion at a high concentration such as 45 wt. % solid matter concentration and in a highly viscous state, as disclosed in said JP-A-53-102359, but actual dispersed particle sizes are considerably larger, and precipitation will take place, when used upon dilution with water, and the object of using a coupling solvent in the process seems not to form a good emulsion with small dispersed particle sizes and a narrow particle size distribution, but to improve the wettability on the metal surface and to form a film free from craters.

JP-A-6 306 340 relates to a vulcanizable adhesive composition comprising a resol-type phenol resin, unvulcanized NBR and chlorinated polyethylene. The adhesive composition can be used in the form of a solution in an organic solvent or in the form of an aqueous dispersion. The composition in the form of an aqueous dispersion can be prepared by dispersing the three essential components into water with a dispersing agent. In Working Example 4, for instance, a PVA-based dispersing agent is used to prepare a vulcanizable adhesive composition which is applied to a steel substrate, dried, and subjected to press vulcanization in the absence of any curing agent for phenol resin.

The aqueous primer composition of US 5,200,455 comprises a polyvinyl alcohol-stabilized aqueous phenolic resin dispersion, which dispersion can be prepared by a process comprising mixing a pre-formed, solid, substantially water-insoluble, phenolic resin; water; an organic coupling solvent; and polyvinyl alcohol to form a dispersion of said phenolic resin in water. Generally, the polyvinyl alcohol is first dissolved in a mixture of water and coupling solvent, and the solid phenolic resin is then added to form the dispersion. The coupling solvents used in US 5,200,455 are solvents which should have a complete miscibility with water such as certain alcohols, ethers, esters and ketones.

JP-A-61 278 579 pertains to a vulcanization adhesive composition comprising a novolak-type phenol resin, a hexamethylenetetramine curing agent, a finely granular silica powder reinforcing agent, and an organic silane suface-treating agent. The adhesive composition can be in the form of a dispersion in an organic solvent, which may e.g. be methanol or methyl ethyl ketone.

### DISCLOSURE OF THE INVENTION

An object of the present invention is to provide an aqueous vulcanizable adhesive composition suitable for use in vulcanization bonding between metal and rubber, using methyl ethyl ketone having a partial miscibility with water in place of the organic solvent having a complete miscibility with water, where an amount of methyl ethyl ketone is considerably reduced.

Such object of the present invention can be attained by an aqueous vulcanizable adhesive composition which comprises a phenol resin emulsion prepared from a water-insoluble phenol resin solution in methyl ethyl ketone and an aqueous water-soluble polymeric substance solution, and a curing agent for phenol resin,
wherein the content of methyl ethyl ketone is not more than 10 wt.-% and wherein the water-insoluble phenol resin is a novolak type phenol resin or a mixture of a novolak type phenol resin with a resol type phenol resin.

Water-insoluble phenol resin for use in the present invention includes novolak-type phenol resins obtained by reaction of phenols having two or three substitutable nuclear hydrogen atoms at the o-position and/or the p-position in respect to the phenolic hydroxyl group, practically such as phenol, m-cresol, p-cresol, p-t-butylphenol, etc., or mixtures thereof, preferably, a mixture of m-cresol and p-cresol as a residue, which is obtained by removing o-cresol as an initial distillate from a mixture of three cresol isomers obtained from coal tar, together with formaldehyde in the presence of an acidic catalyst such as hydrochloric acid, oxalic acid, maleic acid, etc., alone or mixtures thereof with resol type phenol resin.

Resol type phenol resin can be used in a proportion of not more than about 200 parts by weight, preferably 40 to 70 parts by weight on the basis of 100 parts by weight of novolak type phenol resin, and such effects as shortening of curing time and improvement of film durability can be obtained. More than 200 parts by weight of resol type phenol resin is not preferable, because of lowering of liquid stability and adhesiveness. Working of resol type phenol resin as a curing agent for the novolak type phenol resin was found by the present applicant (JP-A-10-121020), where the resol type phenol resin is a phenol resin obtained by condensation reaction of phenols having two or three substitutable nuclear hydrogen atoms at the o-position and/or the p-position in respect to the phenolic hydroxyl group, such as phenol, p-cresol, m-cresol, p-t-butylphenol, etc. or mixtures thereof, with formaldehyde in the presence of a basic catalyst such as sodium hydroxide, barium hydroxide, ammonia, tertiary amine, etc.

The aforementioned JP-A-10-121020 discloses that novolak type phenol resin and resol type phenol resin as a curing agent for the former are used as an organic solvent solution prepared by dissolving both phenol resins into a ketone such as acetone, methyl ethyl ketone, etc. or an alcohol such as methanol, ethanol, etc. to a solid concentration of about 5 to about 20 wt.%, and the resulting organic solvent solution as such is applied to a metal as a vulcanizable adhesive composition with NBR or acrylic rubber, whereas in the present invention about 40 to about 60 wt.% solution in methyl ethyl ketone is prepared and used not as a vulcanizable adhesive directly but for preparing a phenol resin emulsion.

A water-insoluble phenol resin solution in methyl ethyl ketone is used as an about 40 to about 60 wt.% solution capable of minimizing the amount of methyl ethyl ketone solvent and completely dissolving the phenol resin. Preparation of methyl ethyl ketone solution can be carried out at room temperature under stirring for about 1 to about 2 hours.

An aqueous water-soluble polymeric substance solution includes aqueous about 5 to about 20 wt.% solutions of polyvinyl alcohol, acetoacetyl group (-OCOCH₂COCH₃) modified polyvinyl alcohol, polyvinylpyrrolidone, various polyvinyl ethers, polyacrylic acid, polymethacrylic acid, etc. Above all, polyvinyl alcohol having a saponification degree of 60 to 99 mol.%, preferably 85 to 91 mol.% is used. From the viewpoint of improving a warm water resistance it is preferable to use acetoacetyl-modified polyvinyl alcohol having a saponification degree (a ratio of hydroxyl group to the sum total of hydroxyl group, acetyl group, and acetoacetyl group) of 50 to 99.5 mol.%, a modification degree (a ratio of acetoacetyl group to the sum total of hydroxyl group, acetyl group, and acetoacetyl group) of 0.05 to 20 mol.%, and a polymerization degree of 300 to 4,000.

An aqueous polyvinyl alcohol solution or an acetoacetyl-modified polyvinyl alcohol solution can be prepared by slowly adding polyvinyl alcohol or acetoacetyl-modified polyvinyl alcohol to water at room temperature under stirring, after the completion of addition elevating the temperature to about 80° to about 90°C, continuing the stirring at that temperature for about 1 to about 2 hours, and then lowering the temperature down to room temperature.

Phenol resin emulsion can be prepared by stirring a water-insoluble phenol resin solution in methyl ethyl ketone and an aqueous water-soluble polymeric substance solution, as mentioned above, by a homogenizer, homomixer, etc. capable of conducting high speed shearing stirring. More specifically, the aqueous water-soluble polymeric substance solution is slowly added to the methyl ethyl ketone solution under stirring, while increasing the stirring revolution per minutes, and further increasing the stirring revolution per minute while slowly adding water thereto, whereby a phenol resin emulsion having a solid concentration of 5.2 to 31 wt.% can be obtained. The mixing is so conducted as to obtain a phenol resin emulsion, which comprises 5 to 25 wt.%, preferably 10 to 20 wt.%, of phenol resin, 0.2 to 6 wt.%, preferably 3 to 5 wt.%, of water-soluble polymeric substance, such as (acetoacetyl-modified) polyvinyl alcohol, etc., 3 to 40 wt.%, preferably 10 to 20 wt.%, of methyl ethyl ketone, and the balance being water. In place of methyl ethyl ketone, methyl n-propyl ketone, methyl n-butyl ketone, methyl isobutyl ketone, etc. can be also used.

When acetoacetyl-modified polyvinyl alcohol is used as a water-soluble polymer, 0.01 to 3 wt.%, preferably 0.02 to 0.5 wt.%, of an organometallic compound can be added to the phenol resin emulsion, whereby the water resistance can be further improved. The organometallic compound for use to this effect includes water-soluble organotitanium compounds and orga-nozirconium compounds such as dihydroxytitanium bislactate, dipropoxy-titanium bis(triethanolamine), zirconyl acetate, etc.

A curing agent for the phenol resin is added to the phenol resin emulsion thus prepared. When novolak-type phenol resin is used as a phenol resin, a resol-type phenol resin can act a curing agent, as already mentioned before. The curing agent for the phenol resin generally includes hexamethylenetetramine, benzenesulfonic acid, p-toluenesulfonic acid, etc., and preferably hexamethylenetetramine can be used in a proportion of about 0.1 to about 5 parts by weight, preferably about 0.4 to about 1.5 parts by weight, on the basis of 100 parts by weight of phenol resin emulsion, where it is preferable to use water together with hexamethylenetetramine, and water is used in a proportion of not more than 1,000 parts by weight, preferably about 80 to about 200 parts by weight, on the basis of 100 parts by weight of phenol resin emulsion. When acetoacetyl-modified polyvinyl alcohol is used as a water-soluble polymeric substance, water is used in a proportion of about 100 to about 200 parts by weight. Addition of the curing agent for the phenol resin (and water) to the phenol resin emulsion can be carried out by stirring these components for a few minutes, thereby forming an aqueous vulcanizable adhesive composition.

The aqueous vulcanizable adhesive composition thus prepared is applied to metals such as stainless steel, mild steel, aluminum, aluminum die casting product, copper, magnesium, etc., or to resins such as polyamide (nylon), polyester (polyethylene terephthalate, polybutylene terephthalate), etc. by an ordinary method, such as dipping, spraying, brush coating, roll coating, etc., dried at room temperature to about 100°C for a few minutes, baked at about 150° to about 220°C for about 5 to about 15 minutes, and then joined together with unvulcanized nitrile rubber compound, hydrogenated nitrile rubber compound or acrylic rubber compound, followed by press vulcanization at a vulcanization temperature corresponding to the type of rubber. Nitrile rubber compound using sulfur, or sulfur-donating compound, organic peroxide, etc. as a vulcanizing agent or a cross-linking agent can be used as the nitrile rubber compound. Hydrogenated nitrile rubber compound using organic peroxide, etc. as a cross-linking agent can be used as the hydrogenated nitrile rubber compound. Acrylic rubber compound based on acrylic copolymer rubber copolymerized with various cross-linkable groups, using the corresponding vulcanizing agent or cross-linking agent can be used as the acrylic rubber compound.

### BEST MODES FOR CARRYING OUT THE INVENTION

The present invention will be described below, referring to Examples.

### EXAMPLE 1

500g of novolak type phenol resin (Phenolite TD-2106, a product of Dainippon Ink & Chemicals, Inc.) was slowly added to 500g of methyl ethyl ketone (solubility in water at 20°C : 27%) under stirring, and after the completion of addition stirring was continued for about 1 to about 2 hours to make complete dissolution (phenol resin solution a).

Separately, 100g of polyvinyl alcohol (GL-05, a product of the Nippon Synthetic Chemical Industry Co., Ltd. ; saponification degree : 86.5 to 89.0) was slowly added to 900g of water at the ordinary temperature under stirring, and after the completion of addition the temperature was elevated up to 85°C over about one hour, and stirring was continued for one hour, while keeping the temperature at 85°C to make complete dissolution. Then, the temperature was returned to room temperature.

500g of the aqueous 10 wt.% polyvinyl alcohol solution was slowly added to 300g of the 50 wt.% novolak type phenol resin solution in methyl ethyl ketone under stirring at a stirring speed of about 5,000rpm, using a homogenizer capable of a high speed shearing stirring, while increasing the stirring speed up to about 12,000rpm, and further increasing the stirring speed up to about 16,000rpm while slowly adding 200g of water thereto. Then, the high speed stirring was continued at about 16,000rpm for about 3 minutes to prepare a phenol resin emulsion.

533g of the thus obtained phenol resin emulsion (solid matter concentration : 20 wt.%), 4.5g of hexamethylenetetramine, and 462.5g of water were mixed together, and stirred for a few minutes to prepare an aqueous vulcanizable adhesive composition (organic solvent content : 7.95%). The aqueous vulcanizable adhesive composition was applied to a zinc phosphate-treated SPCC steel sheet test piece (thickness : 16mm), dried at 80°C for 3 minutes to evaporate off water, and then baked at 175°C for 10 minutes. Then, unvulcanized rubber compound of the following compound formulation I or II was placed thereon and subjected to press vulcanization at 180°C for 6 minutes to obtain a rubber-metal composite with a 2mm-thick rubber layer.

| (Compound formulation I) | |
|---|---|
| | Parts by weight |
| NBR (N237, a product of JSR) | 100 |

| | |
|---|---|
| SRF carbon black | 93 |
| Dioctyl phthalate | 15 |
| Zinc white | 5 |
| Stearic acid | 3 |
| Antioxidant (Nocrack 224, a product of Ouchi-Shinko Kagaku K.K.) | 1 |
| Tetramethylthiuram disulfile | 1 |
| Mercaptobenzothiazole | 1 |
| Zinc dithiocarbamate | 0.8 |
| Sulfur | 0.2 |
| | |

| (Compound formulation II) | |
|---|---|
| | Parts by weight |
| Active chlorine-containing acrylic rubber (PA 402, a product of Unimatec Co., Ltd.) | 100 |
| HAF carbon black | 40 |
| Powdery silica | 2 |
| Microcrystalline wax | 6 |
| Stearic acid | 3 |
| 4,4' -bis (2,2' -dimethylbenzyl)diphenylamine | 2 |
| Sulfur | 1 |
| Sodium stearate | 3.5 |
| EXAMPLE 2 | |

350g of novolak type phenol resin (PSF-2803, a product of Gun Ei Chemical Industry Co., Ltd.) and 320g of resol type phenol resin (Resitop PL-2108, a product of Gun Ei Chemical Industry Co., Ltd. ; solid matter concentration : 47 wt.% in methyl ethyl ketone solution) were slowly added to 330g of methyl ethyl ketone under stirring, and after the completion of addition stirring was continued for about 1 to about 2 hours to make complete dissolution (phenol resin solution b).

In Example 1, the same amount of the phenol resin solution b was used in place of phenol resin solution a to conduct preparation of a phenol resin emulsion, preparation of an aqueous vulcanizable adhesive composition (organic solvent content : 7.95%), and making of a rubber-metal composite.

### EXAMPLE 3

350g of novolak type phenol resin (Phenolite TD-2106) was slowly added to 330g of methyl ethyl ketone under stirring, and after the completion of addition stirring was continued for about 1 to about 2 hours to make complete dissolution. Then, 320g of resol type phenol resin (Resitop PL-2108 ; solid matter concentration : 47 wt.% in methyl ethyl ketone solution) was added thereto, and mixed and stirred for a few minutes (phenol resin solution c).

In Example 1, the same amount of the phenol resin solution c was used in place of phenol resin solution a to conduct preparation of a phenol resin emulsion, preparation of an aqueous vulcanizable adhesive composition (organic solvent content : 7.95%), and making a rubber-metal composite.

### EXAMPLE 4

100g of acetoacetyl-modified polyvinyl alcohol (Gosefimer Z-320, a product of the Nippon Synthetic Chemical Industry Co., Ltd. ; saponification degree : 93 mol.%, modification degree : 5.7 mol.%) was slowly added to 900g of water at the ordinary temperature under stirring, and after the completion of addition the temperature was elevated up to 85°C over about one hour, and stirring was continued for one hour, while keeping the temperature at 85 °C to make complete dissolution, and then the temperature was returned to room temperature.

250g of the aqueous 10 wt.% acetoacetyl-modified polyvinyl alcohol solution was slowly added to 400g of the phenol resin solution a used in Example 1 under stirring at a stirring speed of about 5,000rpm, using a homogenizer capable of high speed shearing stirring, while increasing the stirring speed up to about 12,000rpm, and further increasing the stirring speed up to about 16,000rpm while slowly adding 350g of water thereto. Then, high speed stirring was continued at about 16,000rpm for about 3 minutes to prepare a phenol resin emulsion.

400g of the thus obtained phenol resin emulsion (solid matter concentration : 22.5 wt.%), 4.5g of hexamethylenetetramine, and 595.5g of water were mixed together, and stirred for a few minutes to prepare an aqueous vulca-nizable adhesive composition (organic solvent content : 8%). A rubber-metal composite was prepared, using the aqueous vulcanizable adhesive composition in the same manner as in Example 1.

### EXAMPLE 5

In Example 4, the same amount of the phenol resin solution c used in Example 3 was used in place of the phenol resin solution a.

### EXAMPLE 6

In Example 4, the same amount of the phenol resin solution c was used in place of phenol resin solution a, and after the preparation of the phenol resin emulsion, 2g of dihydroxytitanium bislactate was added thereto, followed by stirring at about 3,000rpm for about 3 minutes. The resulting emulsion was used.

### REFERENCE EXAMPLE

In Example 1, a solvent-based vulcanizable adhesive composition (organic solvent content : 90.6%) comprising 90g of novolak type phenol resin (Phenolite TD-2106), 4.5g of hexamethylenetetramine, and 905.5g of methanol was used as a vulcanizable adhesive composition.

The rubber-metal composites obtained in the foregoing Examples and Reference Example were subjected to determination of bonding strength (according to JIS K-6256 90° peeling test) and percent retained rubber area (according to the same procedure as above) at the initial and warm water (80°C) dipping for 70 hours and 140 hours. The results are shown in the following Table 1 (compound formulation I) and Table 2 (compound formulation II).

**Table 1**

| | Bonding strength (N/mm) | | | Percent retained rubber area (%) | | |
|---|---|---|---|---|---|---|
| | | Warm water dipping | Warm water dipping | | Warm water dipping | Warm water dipping |
| Example | Initial | 70 hrs | 140 hrs | Initial | 70 hrs | 140 hrs |
| Ex. 1 | 19.2 | 5.6 | 4.8 | 100 | 0 | 0 |
| " 2 | 19.4 | 8.0 | 5.0 | 100 | 20 | 0 |
| " 3 | 19.1 | 7.9 | 5.0 | 100 | 10 | 0 |
| " 4 | 19.3 | 18.0 | 16.3 | 100 | 90 | 50 |
| " 5 | 19.3 | 18.5 | 17.8 | 100 | 100 | 70 |
| " 6 | 19.2 | 19.0 | 18.2 | 100 | 100 | 95 |
| Ref. Ex. | 19.3 | 19.2 | 19.2 | 100 | 100 | 100 |

**Table 2**

| | | Bonding strength (N/mm) | | Percent retained rubber area (%) | | |
|---|---|---|---|---|---|---|
| | | Warm water dipping | Warm water dipping | | Warm water dipping | Warm water dipping |
| Example | Initial | 70 hrs | 140 hrs | Initial | 70 hrs | 140 hrs |
| Ex. 1 | 9.0 | 2.5 | 1.9 | 100 | 0 | 0 |
| " 2 | 9.1 | 3.0 | 2.0 | 100 | 10 | 0 |
| " 3 | 8.9 | 3.4 | 2.3 | 100 | 5 | 0 |
| " 4 | 9.1 | 7.3 | 6.0 | 100 | 95 | 80 |
| " 5 | 9.1 | 7.7 | 6.2 | 100 | 100 | 90 |
| " 6 | 9.2 | 7.7 | 6.8 | 100 | 100 | 100 |
| Ref. Ex. | 9.0 | 7.7 | 6.8 | 100 | 100 | 100 |

Median diameter of the phenol resin emulsion was determined by a particle size distribution meter (LA-910, a product of Horiba, Ltd.), and found to be 0.3 to 0.5µm (Examples 1 and 2), or 0.3 to 0.6 (Examples 3 to 6) throughout all the compound formulations. According to the disclosure of JP-A-53-102359, polyvinyl alcohol (GL-05, a product of the Nippon Synthe-tic Chemical Industry Co., Ltd.) was dissolved in an aqueous 20 wt.% methanol solution, and novolak type phenol resin powder (Phenolite TD-210) was slowly added to the solution while subjecting the solution to a high speed shearing stirring (5,000rpm), and then the stirring speed was increased up to 16,000rpm, followed by continuing the stirring at that speed for 3 minutes to obtain a phenol resin emulsion (composition : 92.5 parts of phenol resin, 7.5 parts of PVA, 97.6 parts of water, and 24.4 parts of methanol ; solid matter concentration : 45 wt. %). Median diameter of the thus obtained emulsion was determined and found to be 2.5 to 7.5µm.

Example 1 shows equivalent initial bonding strength and initial percent retained rubber area to those of Reference Example, and thus shows an initial adhesiveness on the same level as that of the organic solvent system, while considerably reducing the content of harmful organic solvent to human bodies and environments. Examples 2 and 3 using the novolak type phenol resin and the resol type phenol resin together show improved bonding strength and percent retained rubber area against warm water.

Example 4 also shows equivalent bonding strength and percent retained rubber area to those of Reference Example as to the warm water-resistant adhesiveness, and thus shows a warm water-resistant adhesiveness on the same level as that of the organic solvent system, while considerably reducing the content of harmful organic solvent to human bodies and environments. Examples 5 and 6 using the novolak type phenol resin and the resol type phenol resin together also show good bonding strength and percent retained rubber area as to the warm water-resistant adhesiveness, and particularly owing to use of an organometallic compound together Example 6 shows substantially equivalent bonding strength and percent retained rubber area to those of Reference Example.

It is also evident that phenol resin emulsions of all the Examples are formed in good quality.

### INDUSTRIAL UTILITY

In a phenol resin emulsion for use in the formation of the present aqueous vulcanizable adhesive composition, the amount of methyl ethyl ketone, a harmful organic solvent to human bodies and environments, can be limited to the necessary minimum one due to the use of a water-insoluble phenol resin as a highly concentrated phenol resin solution in methyl ethyl ketone, and a good emulsion can be formed due to the use of the solution in methyl ethyl ketone. Methyl ethyl ketone is a partially water-miscible solvent (solubility in water at 20°C : 27%), whereas when an organic coupling solvent, etc. disclosed in JP-A-53-102359, which is completely miscible with water, are used in place of methyl ethyl ketone, only the water-soluble organic solvent is dissolved into water at the time of mixing with an aqueous water-soluble polymeric substance solution, and the phenol resin itself is deposited to gell, that is, in the same manner as if the phenol resin powder were directly dispersed into an aqueous solution, and no emulsion of good quality is obtainable. In the case of using methyl ethyl ketone, on the other hand, the phenol resin can be emulsified as a solution in methyl ethyl ketone, so a phenol resin emulsion of good quality with smaller dispersed particle sizes and a narrow uniform particle size distribution can be formed.

The present aqueous vulcanizable adhesive composition comprising the phenol resin emulsion and hexamethylenetetramine can give a rubber-metal composite having an equivalent adhesiveness to that of an organic solvent (methanol) type vulcanizable adhesive composition of the foregoing Reference Example, as shown in the results of the foregoing Examples, while reducing the amount of methyl ethyl ketone contained in the present aqueous vulcanizable adhesive composition to not more than 10 wt.% on the basis of the composition.

Furthermore, the present aqueous vulcanizable adhesive composition using acetoacetyl-modified polyvinyl alcohol as a water-soluble polymer can give a warm water-resistant adhesiveness on substantially the same level as that of the organic solvent (methanol) type vulcanizable adhesive composition of the foregoing Reference Example.

## Claims

1. A phenol resin emulsion prepared from a water-insoluble phenol resin solution in methyl ethyl ketone and an aqueous water-soluble polymeric substance solution, wherein the water-insoluble phenol resin is a novolak type phenol resin or a mixture of a novolak type phenol resin with a resol type phenol resin.

2. An aqueous vulcanizable adhesive composition, which comprises a phenol resin emulsion as claimed in claim 1 and a curing agent for phenol resin, wherein the content of methyl ethyl ketone is not more than 10 wt.-%.

3. An aqueous vulcanizable adhesive composition according to claim 2, wherein the phenol resin emulsion comprises 5 to 25 wt.-% of water-insoluble phenol resin, 0.2 to 6 wt.-% of water-soluble polymeric substance, and 3 to 40 wt.-% of methyl ethyl ketone, the balance being water.

4. An aqueous vulcanizable adhesive composition according to claim 2 or 3, wherein 40 to 70 parts by weight of the resol type phenol resin is used on the basis of 100 parts by weight of the novolak type phenol resin.

5. An aqueous vulcanizable adhesive composition according to any of claims 2 to 4, wherein the water-insoluble phenol resin is.used as a solution at a concentration of 40 to 60 wt.-% in methyl ethyl ketone.

6. An aqueous vulcanizable adhesive composition according to any of claims 2 to 5, wherein the water-soluble polymeric substance is polyvinyl alcohol.

7. An aqueous vulcanizable adhesive composition according to any of claims 2 to 5, wherein the water-soluble polymeric substance is acetoacetyl-modified polyvinyl alcohol.

8. An aqueous vulcanizable adhesive composition according to claim 7, wherein an organometallic compound is further contained.

9. An aqueous vulcanizable adhesive composition according to any of claims 2 to 8, wherein the curing agent for phenol resin is hexamethylenetetramine.

10. An aqueous vulcanizable adhesive composition according to claim 9, wherein 0.1 to 5 parts by weight of the hexamethylenetetramine is used on the basis of 100 parts by weight of the phenol resin emulsion.

11. An aqueous vulcanizable adhesive composition according to claim 9 or 10, wherein water is used together with hexamethylenetetramine.

12. An aqueous vulcanizable adhesive composition according to claim 11, wherein not more than 1,000 parts by weight of the water is used on the basis of 100 parts by weight of the phenol resin emulsion.

13. A use of an aqueous vulcanizable adhesive composition according to any of claims 2 to 12 in vulcanization bonding of a metal or resin to rubber.

14. A use according to claim 13, wherein the rubber is nitrile rubber, hydrogenated nitrile rubber or acrylic rubber.

15. A composite of rubber and metal or resin vulcanization bonded by an aqueous vulcanizable adhesive composition according to any of claims 2 to 12.

## Patentansprüche

1. Phenolharzemulsion, die aus einer wasserunlöslichen Phenolharzlösung in Methylethylketon und einer wässrigen Lösung einer wasserlöslichen polymeren Substanz hergestellt ist, worin das wasserunlösliche Phenolharz ein Phenolharz vom Novolak-Typ oder eine Mischung eines Phenolharzes vom Novolak-Typ mit einem Phenolharz vom Resol-Typ darstellt.

2. Wässrige vulkanisierbare Adhäsivzusammensetzung, die eine Phenolharzemulsion wie in Anspruch 1 beansprucht und ein Härtungsmittel für Phenolharz umfasst, worin der Gehalt an Methylethylketon nicht mehr als 10 Gew.% beträgt.

3. Wässrige vulkanisierbare Adhäsivzusammensetzung gemäß Anspruch 2, worin die Phenolharzemulsion 5 bis 25 Gew.% eines wasserunlöslichen Phenolharzes, 0,2 bis 6 Gew.% einer wasserlöslichen polymeren Substanz und 3 bis 40 Gew.% von Methylethylketon umfasst, wobei der Rest Wasser ist.

4. Wässrige vulkanisierbare Adhäsivzusammensetzung gemäß Anspruch 2 oder 3, worin 40 bis 70 Gew.-Teile des Phenolharzes vom Resol-Typ, bezogen auf 100 Gew.-Teile Phenolharz vom Novolak-Typ, verwendet werden.

5. Wässrige vulkanisierbare Adhäsivzusammensetzung gemäß einem der Ansprüche 2 bis 4, worin das wasserunlösliche Phenolharz als eine Lösung in einer Konzentration von 40 bis 60 Gew.% in Methylethylketon verwendet wird.

6. Wässrige vulkanisierbare Adhäsivzusammensetzung gemäß einem der Ansprüche 2 bis 5, worin die wasserlösliche polymere Substanz Polyvinylalkohol ist.

7. Wässrige vulkanisierbare Adhäsivzusammensetzung gemäß einem der Ansprüche 2 bis 5, worin die wasserlösliche polymere Substanz ein Acetoacetyl-modifizierter Polyvinylalkohol ist.

8. Wässrige vulkanisierbare Adhäsivzusammensetzung gemäß Anspruch 7, worin ferner eine organometallische Verbindung enthalten ist.

9. Wässrige vulkanisierbare Adhäsivzusammensetzung gemäß einem der Ansprüche 2 bis 8, worin das Härtungsmittel für Phenolharz Hexamethylentetramin darstellt.

10. Wässrige vulkanisierbare Adhäsivzusammensetzung gemäß Anspruch 9, worin 0,1 bis 5 Gew.-Teile Hexamethylentetramin, bezogen auf 100 Gew.-Teile der Phenolharzemulsion, verwendet werden.

11. Wässrige vulkanisierbare Adhäsivzusammensetzung gemäß Anspruch 9 oder 10, worin Wasser zusammen mit Hexamethylentetramin verwendet wird.

12. Wässrige vulkanisierbare Adhäsivzusammensetzung gemäß Anspruch 11, worin nicht mehr als 1.000 Gew.-Teile Wasser, bezogen auf 100 Gew.-Teile der Phenolharzemulsion, verwendet werden.

13. Verwendung einer wässrigen vulkanisierbaren Adhäsivzusammensetzung gemäß einem der Ansprüche 2 bis 12 für die Vulkanisationsbindung eines Metalls oder Harzes an Kautschuk.

14. Verwendung gemäß Anspruch 13, worin der Kautschuk Nitrilkautschuk, hydrierten Nitrilkautschuk oder Acrylkautschuk darstellt.

15. Verbundwerkstoff von Kautschuk und Metall oder Harz, vulkanisationsgebunden durch eine wässrige vulkanisierbare Adhäsivzusammensetzung gemäß einem der Ansprüche 2 bis 12.

## Revendications

1. Émulsion de résine de phénol préparée à partir d'une solution de résine de phénol insoluble dans l'eau dans de la méthyléthylcétone et d'une solution de substance polymère hydrosoluble aqueuse, dans laquelle la résine de phénol insoluble dans l'eau est une résine de phénol de type novolaque ou un mélange d'une résine de phénol de type novolaque avec une résine de phénol de type résol.

2. Composition adhésive aqueuse pouvant être vulcanisée, qui comprend une émulsion de résine de phénol selon la revendication 1 et un agent de cuisson pour la résine de phénol, dans laquelle la teneur de la méthyléthylcétone n'est pas supérieure à 10 % en poids.

3. Composition adhésive aqueuse pouvant être vulcanisée selon la revendication 2, dans laquelle l'émulsion de résine de phénol comprend 5 à 25 % en poids de résine de phénol insoluble dans l'eau, 0,2 à 6 % en poids de substance polymère hydrosoluble et 3 à 40 % en poids de méthyléthylcétone, le reste étant de l'eau.

4. Composition adhésive aqueuse pouvant être vulcanisée selon la revendication 2 ou 3, dans laquelle 40 à 70 parties en poids de la résine de phénol de type résol sont utilisées sur la base de 100 parties en poids de la résine de phénol de type novolaque.

5. Composition adhésive aqueuse pouvant être vulcanisée selon l'une quelconque des revendications 2 à 4, dans laquelle la résine de phénol insoluble dans l'eau est utilisée en tant que solution à une concentration de 40 à 60 % en poids dans de la méthyléthylcétone.

6. Composition adhésive aqueuse pouvant être vulcanisée selon l'une quelconque des revendications 2 à 5, dans laquelle la substance polymère hydrosoluble est de l'alcool de polyvinyle.

7. Composition adhésive aqueuse pouvant être vulcanisée selon l'une quelconque des revendications 2 à 5, dans laquelle la substance polymère hydrosoluble est de l'alcool de polyvinyle modifié à l'acétoacétyle.

8. Composition adhésive aqueuse pouvant être vulcanisée selon la revendication 7, qui contient en outre un composé organométallique.

9. Composition adhésive aqueuse pouvant être vulcanisée selon l'une quelconque des revendications 2 à 8, dans laquelle l'agent de cuisson pour la résine de phénol est de l'hexaméthylènetétramine.

10. Composition adhésive aqueuse pouvant être vulcanisée selon la revendication 9, dans laquelle 0,1 à 5 parties en poids de l'hexaméthylènetétramine sont utilisées sur la base de 100 parties en poids de l'émulsion de résine de phénol.

11. Composition adhésive aqueuse pouvant être vulcanisée selon la revendication 9 ou 10, dans laquelle de l'eau est utilisée en même temps que l'hexaméthylènetétramine.

12. Composition adhésive aqueuse pouvant être vulcanisée selon la revendication 11, dans laquelle pas plus de 1 000 parties en poids de l'eau sont utilisées sur la base de 100 parties en poids de l'émulsion de résine de phénol.

13. Utilisation d'une composition adhésive aqueuse pouvant être vulcanisée selon l'une quelconque des revendications 2 à 12 dans une liaison de vulcanisation d'un métal ou d'une résine à du caoutchouc.

14. Utilisation selon la revendication 13, dans laquelle le caoutchouc est un caoutchouc nitrile, un caoutchouc nitrile hydrogéné ou un caoutchouc acrylique.

15. Composite de caoutchouc et de métal ou de résine lié par vulcanisation par une composition aqueuse adhésive pouvant être vulcanisée selon l'une quelconque des revendications 2 à 12.
